# EUROPEAN PATENT APPLICATION

(11) **EP 2 660 803 A1**
(43) Date of publication of application: **06.11.2013**
(21) Application number: 11853423.9
(22) Date of filing: 09.11.2011
(51) Int. Cl.: G09F 13/18, B60K 37/04

(54) **DISPLAY DEVICE**

(30) Priority: 28.12.2010 JP 2010291428
(71) Applicant: Nippon Seiki Co., Ltd., Niigata 940-8580 (JP)
(72) Inventor: HAMADA, Kazunari, Nagaoka, Niigata (JP); YABE, Sadao, Nagaoka, Niigata (JP)
(74) Representative: Carpmaels & Ransford LLP
(86) International application number: PCT/JP2011/075772
(87) International publication number: WO 2012/090591

(57) **Abstract**

A display device is provided in which all indicators can be illuminated with substantially uniform brightness irrespective of the distance of the indicators from the light source or the positional relationship of the indicators. A light guide (11) guides light emitted from a light source (20). A design display (12) has a light emitter (122) for emitting light. A low-refractive-index portion (14a) having a lower light refraction index than the light guide (11) is installed between the light guide (11) and the design display (12). A light-diffusing portion (13) is formed in the light guide (11), and light guided by the light guide (11) is diffused. A display light adjuster (15) for changing the emission efficiency is provided at least inside a region corresponding to the light emitter (122).

## Description

### TECHNICAL FIELD

The present invention relates to a display device in which light output from a light source is guided by a light guiding portion and a design display portion and the like are illuminated with the light. The display device is mounted on an automobile and the like.

### BACKGROUND ART

As such a technology, for example, Patent Literatures 1 to 3 disclose a light guiding member provided with a sheet-like member which has flexibility and light transmissive property and low refractive index portions which are arranged on both surfaces of the sheet-like member and have a refractive index of light lower than that of the sheet-like member. In the light guiding member disclosed in Patent Literatures 1 to 3 described above, however, a design illuminated by light which is guided and output by the light guiding member is not considered. Therefore, when a predetermined design is illuminated by the light guiding member, there is a problem that it is not possible to efficiently illuminate the design.

Then, the present applicant proposed a display device which prevents or reduces output of light from an unnecessary part of the light guiding portion by guiding light which is incident from an end portion of a light guide member, and providing a light spreading portion corresponding to a design display portion, so that it is possible to efficiently illuminate an index portion displayed by the design display portion (Japanese Patent Application No. 2010-110608).

### CITATION LIST

### PATENT LITERATURE

[PTL 1] Japanese Unexamined Patent Application Publication No. S51-73445
[PTL 2] Japanese Unexamined Patent Application Publication No. S52-87046
[PTL 3] Japanese Unexamined Patent Application Publication No. H04-232906

### SUMMARY OF THE INVENTION

### PROBLEMS TO BE SOLVED BY THE INVENTION

However, the display device has had a problem that luminescent brightness of an index portion is high in an area closer to a light source and, as the distance from the light source to the index portion becomes long, the light is attenuated and luminescent brightness becomes low. Further, in a case in which a plurality of index portions are arranged in a substantially straight line when viewed from the light source, since a greater amount of light is output (consumed) sequentially at index portions located closer to the light source, there has been a problem that luminescent brightness becomes low in an index portion located behind a certain index portion. Moreover, regarding an index portion located behind a hole formed for the purpose of, for example, inserting a pointer shaft and the like when viewed from the light source, there has been a problem that brightness becomes low due to shadow formed by the hole. Further, depending on the shape of an end surface, there has been a problem that an area near the end surface becomes brighter by the light reflected on the end surface and uneven brightness occurs.

In view of the above-described problems, an object of the present invention is to provide a display device in which all index portions can be illuminated with substantially uniform brightness irrespective of the distance from the light source to the index portions or positional relationships among the index portions.

### MEANS FOR SOLVING THE PROBLEM

A display device according to a first aspect of the present invention includes:
a light source;
a light guiding portion for guiding light output from the light source;
a design display portion which includes a light outputting portion from which the light is output;
a low refractive index portion provided between the light guiding portion and the design display portion, the low refractive index portion having lower refractive index of light than that of the light guiding portion; and
a light spreading portion formed in the light guiding portion for spreading the light which is guided by the light guiding portion,
wherein a display light adjusting portion for changing output efficiency is provided in an area corresponding at least to the light outputting portion.

In a display device according to a second aspect of the present invention, the display light adjusting portion is constituted by the light spreading portion and a low refractive index portion for adjusting light.

### EFFECT OF THE INVENTION

In the present invention, by providing index portions (light outputting portions) which transmit light in accordance with a design of a design display portion, and providing non-transmissive portions which do not transmit light at portions other than the index portions, output of light from an unnecessary part of the light guiding portion is prevented or reduced, whereby it is possible to efficiently illuminate the design displayed by the design display portion. Further, it is possible to provide a display device in which all index portions can be illuminated with substantially uniform brightness irrespective of the distance from the light source to the index portions or positional relationships among the index portions.

### BRIEF DESCRIPTION OF THE DRAWINGS

[FIG. 1] FIG. 1 is a perspective view of a component constitution of an embodiment of the present invention.
[FIG. 2] FIG. 2 is a front view of a display device of the embodiment of the present invention.
[FIG. 3] FIG. 3 is a cross-sectional view taken along line C-C of FIG. 2.
[FIG. 4] FIG. 4 is a cross-sectional view of the display device in which a display light adjusting portion is disposed on a surface of a light guiding portion.
[Fig. 5] FIG. 5 illustrates enlarged views of areas A and B of FIG. 2.
[FIG. 6] FIG. 6 illustrates enlarged views of areas A and B of FIG. 2 (a second embodiment).
[FIG. 7] FIG. 7 is a schematic diagram of an optical path in a light guiding portion.
[FIG. 8] FIG. 8 is a cross-sectional view of a display device according to a third embodiment.
[FIG. 9] FIG. 9 is a cross-sectional view of a display device according to a fourth embodiment.
[FIG. 10] FIG. 10 is a cross-sectional view of a display device according to a fifth embodiment.
[FIG. 11] FIG. 11 is a cross-sectional view of a display device according to a sixth embodiment.

### MODES FOR CARRYING OUT THE INVENTION

Hereinafter, one embodiment of the present invention will be described with reference to the accompanying drawings.

A display device 100 includes a display member 10 which displays a predetermined design, and a light source 20 which outputs light. In the display device 100, the light output from the light source 20 is received in an end portion of the display member 10, and is output from a predetermined area of the display member 10. Specifically, the display device 100, for example, is used in a vehicle meter, a cellular phone, a display and the like. In the present embodiment, the display device 100 is used in the vehicle meter.

The light source 20 is a rod-like light source which outputs light in a linear manner. The light source 20 includes, for example, a light emitting element, such as a cold cathode tube, a light emitting diode and an organic EL element. The light source 20 is provided at a position to allow the output light to be incident into the display member 10 (a light guiding portion 11 which will be described later). Specifically, the light source 20, for example, is provided such that a light outputting portion of the light source 20 faces a side surface of the display member 10 (the light guiding portion 11 which will be described later). The light output from the light source 20 is incident into the light guiding portion 11.

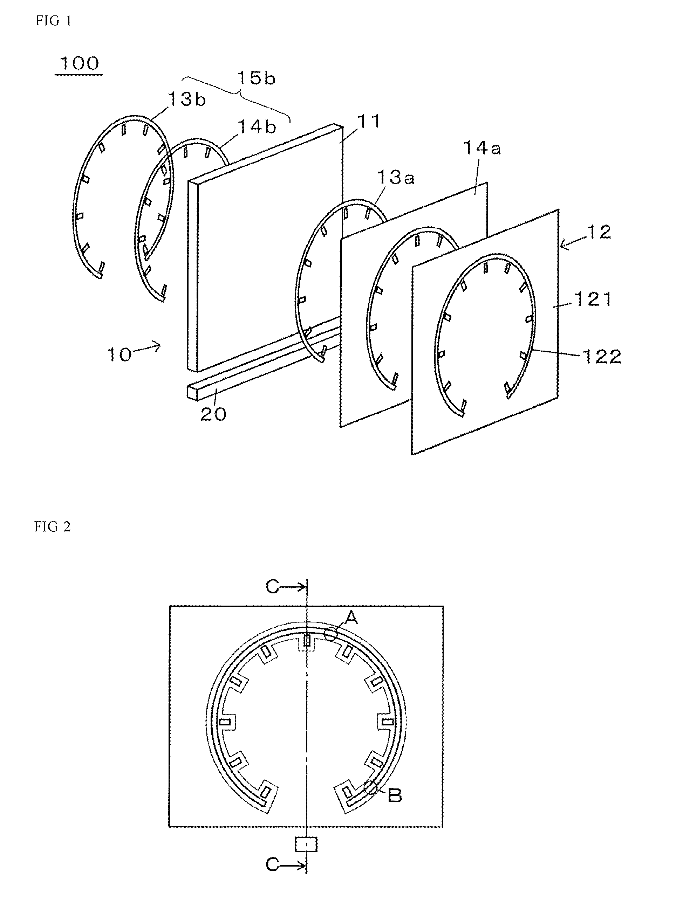

The display member 10 includes the light guiding portion 11, a design display portion 12, a surface light spreading portion 13a, a rear surface light spreading portion 13b, a low refractive index portion 14a, and a low refractive index portion for adjusting light 14b as illustrated in FIG. 1. The display light adjusting portion 15 is a surface light adjusting portion 15a which consists of the surface light spreading portion 13a and the low refractive index portion for adjusting light 14b, or a rear surface light adjusting portion 15b which consists of the rear surface light spreading portion 13b and the low refractive index portion for adjusting light 14b.

The light guiding portion 11 takes in and guides the light output from the light source 20. Here, the light guiding portion 11 is formed by a member which is made of transparent or semi-transparent plate-like synthetic resin (for example, a polycarbonate plate) having light transmissive property (including half-light transmissive property).

The design display portion 12 is disposed on the side of a surface 111 of the light guiding portion 11 and includes a non-transmissive portion 121 which does not output (transmit) light and an index portion (a light outputting portion) 122 which outputs light and displays a design and the like brightly.

The non-transmissive portion 121 is formed using, for example, ink having light blocking property by printing, coating and the like and forms a design in which a part of a design (a design representing a character, a picture, a figure, a symbol and the like) of a vehicle meter is cut out. The non-transmissive portion 121 may be a layer having light transmissive property (including half-light transmissive property).

The index portion 122 is a through hole (which may be suitably changed to a notch) formed in a part of the design of the vehicle meter cut in the non-transmissive portion 121. Here, the index portion 122 is formed by cutout picture printing and the like. Furthermore, since it is sufficient that the index portion 122 allows the light spread by the light spreading portion 13 which will be described later to pass therethrough, the index portion 122 is formed, for example, by white printing having light transmissive property. In this manner, by providing the index portion 122 which transmit light in accordance with the design of the design display portion 12, and forming other portion as the non-transmissive portion 121 which do not transmit light, output of light from an unnecessary part of the light guiding portion 11 is prevented or reduced, whereby it is possible to efficiently illuminate the design displayed by the design display portion 12.

The light spreading portion 13 (the surface light spreading portion 13a and the rear surface light spreading portion 13b) is provided on the surface 111 or a rear surface 112 of the light guiding portion 11 by printing, coating and the like using a material having light spreading property. The light spreading portion 13 spreads light guided by the light guiding portion 11. The spread light transmits the index portion 122 and is output from the index portion 122. The light spreading portion 13 is provided in an area corresponding to the index portion 122. For example, at least a part of the light spreading portion 13 is provided to overlap the index portion 122 when viewed from the normal direction on the surface of the design display portion 12.

Furthermore, the light spreading portion 13 may be larger than the index portion 122. For example, the light spreading portion 13 may have a width wider than that of the index portion 122. Furthermore, the light spreading portion 13 may have a shape similar to and be larger than the index portion 122. In this way, even when the light spreading portion 13 is provided at a position shifted from the index portion 122 (that is, a position out of an area corresponding to the index portion 122), it is possible to spread light toward the index portion 122 and it is possible for the index portion 122 to efficiently output the light spread by the light spreading portion 13. Furthermore, a viewing angle of the index portion 122 becomes wide.

Furthermore, since it is sufficient that the light spreading portion 13 has light transmissive property, for example, the light spreading portion 13 may be obtained by directly forming a dotted pattern and the like, which include a concave-convex part and the like, on the surface of the light guiding portion 11 through microdot, imprint, etching and the like. Furthermore, the light spreading portion 13 may be obtained by providing bubbles having light spreading property on the surface of the light guiding portion 11 having light transmissive property. In these cases, the light spreading portion 13 may be made of the same material as that of the light guiding portion 11. Alternatively, the light guiding portion 11 and the light spreading portion 13 may be configured by mixing gold powder and the like having light spreading property into glass having light transmissive property.

In the present embodiment, the light spreading portion 13 is a light spreading film (sheet)-like member and is provided on the rear surface 112 of the light guiding portion 11. Further, the light spreading portion 13 is provided at substantially the same position as that of the index portion 122 in substantially the same shape as that of the index portion 122. With such a configuration, it is possible to provide the light spreading portion 13 without a complicated design. Note that, the spreading described herein suitably includes a change in the course of light due to diffused reflection, scattering, refraction, reflection and the like.

The surface light spreading portion 13a is disposed on the surface 111 of the light guiding portion 11, and is a transmissive light spreading portion. The surface light spreading portion 13a spreads light which is incident from the surface 111 of the light guiding portion 11 by mainly scattering and refraction and the like on the side of the index portion 122. The rear surface light spreading portion 13b is disposed on the rear surface 112 of the light guiding portion 11 and is non-transmissive light spreading portion. The rear surface light spreading portion 13b spreads light which is incident from the rear surface 112 of the light guiding portion 11 by reflection, diffused reflection, scattering and the like on the side of the light guiding portion 11. A part of the rear surface 112 of the light guiding portion 11 excluding the rear surface light spreading portion 13b is formed as an exposed surface 113 which is in contact with an air layer.

The low refractive index portion 14a is provided to cover the entire surface 111 of the light guiding portion 11. The low refractive index portion for adjusting light 14b is provided between the light guiding portion 11 and the light spreading portion 13 (the surface light spreading portion 13a, the rear surface light spreading portion 13b).

The low refractive index portion 14a and the low refractive index portion for adjusting light 14b are transparent or semi-transparent and have light transmissive property (including half-light transmissive property), and have a refractive index of light lower than that of the light guiding portion 11. The low refractive index portion 14a and the low refractive index portion for adjusting light 14b, for example, are formed by printing, coating and the like using synthetic resin having a refractive index of light lower than that of the light guiding portion 11. The low refractive index portion 14a and the low refractive index portion for adjusting light 14b may be provided by a member made of plate-like synthetic resin (for example, an acrylic plate) having light transmissive property.

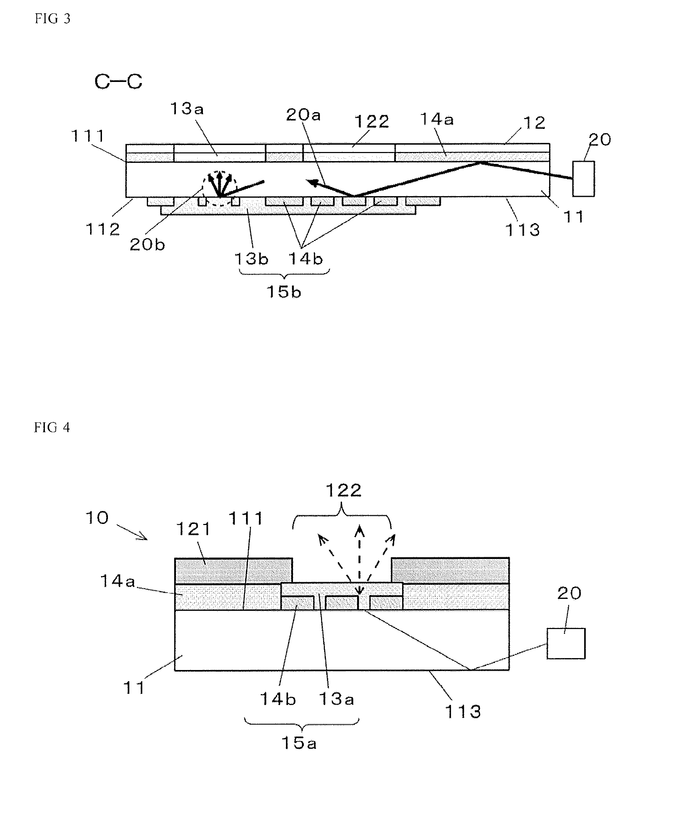

The display light adjusting portion 15 includes a surface light adjusting portion 15a (see FIG. 4) which consists of the surface light spreading portion 13a and the low refractive index portion for adjusting light 14b, and a rear surface light adjusting portion 15b (see FIG. 3) which consists of the rear surface light spreading portion 13b and the low refractive index portion for adjusting light 14b.

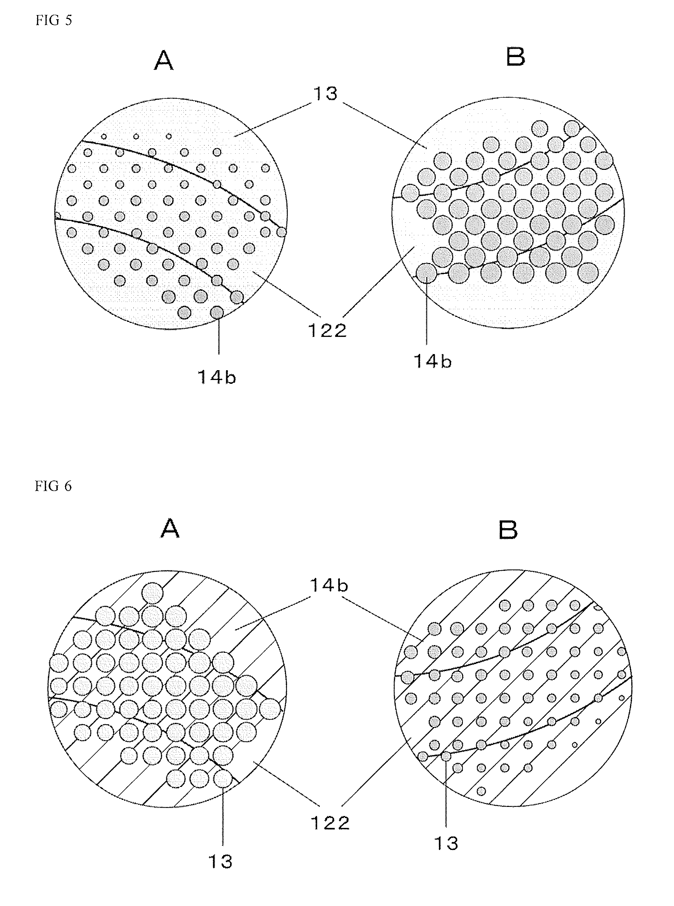

As illustrated in FIG. 5, the display light adjusting portion 15 is formed by disposing the low refractive index portion for adjusting light 14b in a dot pattern (by printing). Further, as a second embodiment, as illustrated in FIG. 6, a dot pattern-shaped light spreading portion 13 (a surface light spreading portion 13a or a rear surface light spreading portion 13b) may be provided to form the display light adjusting portion 15.

The display device is constituted by the above-described structure. In the following description, a method for adjusting the rate of outputting light in the display light adjusting portion 15 will be described.

The light output from the light source 20 is incident into the light guiding portion 11, repeats reflection on an interface of the light guiding portion 11, and travels inside the light guiding portion 11. When this guided light reaches the display light adjusting portion 15, the light is divided into a first beam of light 20a which will be subject to total reflection by the low refractive index portion for adjusting light 14b, and a second beam of light 20b which will be spread by the light spreading portion 13. The first beam of light 20a further travels inside the light guiding portion 11 due to total reflection by the low refractive index portion for adjusting light 14b. The second beam of light 20b spread by the light spreading portion 13 is output from the index portion 122 of the design display portion 12 and displays the index portion 122 brightly.

An amount of light output from the index portion 122 is adjusted in accordance with the ratio in area of the light spreading portion 13 (the surface light spreading portion 13a, the rear surface light spreading portion 13b) and the low refractive index portion for adjusting light 14b per unit area of the display light adjusting portion 15. For example, if the area of the low refractive index portion for adjusting light 14b is large and the area of the light spreading portion 13 is small, most of the light is subject to total reflection by the low refractive index portion for adjusting light 14b. Therefore, the amount of light output from the index portion 122 becomes small (output efficiency becomes low). On the contrary, if the area of the low refractive index portion for adjusting light 14b is small and the area of the light spreading portion 13 is large, the light is spread in the light spreading portion 13, and the amount of light output from the index portion 122 becomes large (output efficiency becomes high). Therefore, it is possible to suitably increase and decrease the amount of output light by the display light adjusting portion 15.

As the distance from the light source 20 to the display light adjusting portion 15 becomes long, a ratio which the area of the low refractive index portion for adjusting light 14b per unit area of the display light adjusting portion 15 occupies becomes low. Thereby, regarding the display light adjusting portion 15, since an area of the low refractive index portion for adjusting light 14b is large if the distance from the light source 20 is short, an amount of light output from the index portion 122 becomes small (output efficiency becomes low). Further, since the area of the low refractive index portion for adjusting light 14b is small if the distance from light source 20 is long, the amount of light output from the index portion 122 becomes large (output efficiency becomes high).

The light guided inside the light guiding portion 11 usually travels in the propagating direction of light due to total reflection. In this process, the light is scattered and attenuated, whereby the amount of guided light is decreased as the distance from the light source 20 becomes long. Accordingly, it is possible to make an adjustment such that the index portion 112 located at a short distance from the light source 20 and the index portion 112 located at a long distance from the light source 20 output light of substantially uniform brightness by increasing output efficiency of the display light adjusting portion 15. Similarly, it is also possible to lower the display luminance of the side of the index portion 122 near the light source 20 and to increase the display luminance of side of the index portion 122 far from the light source 20.

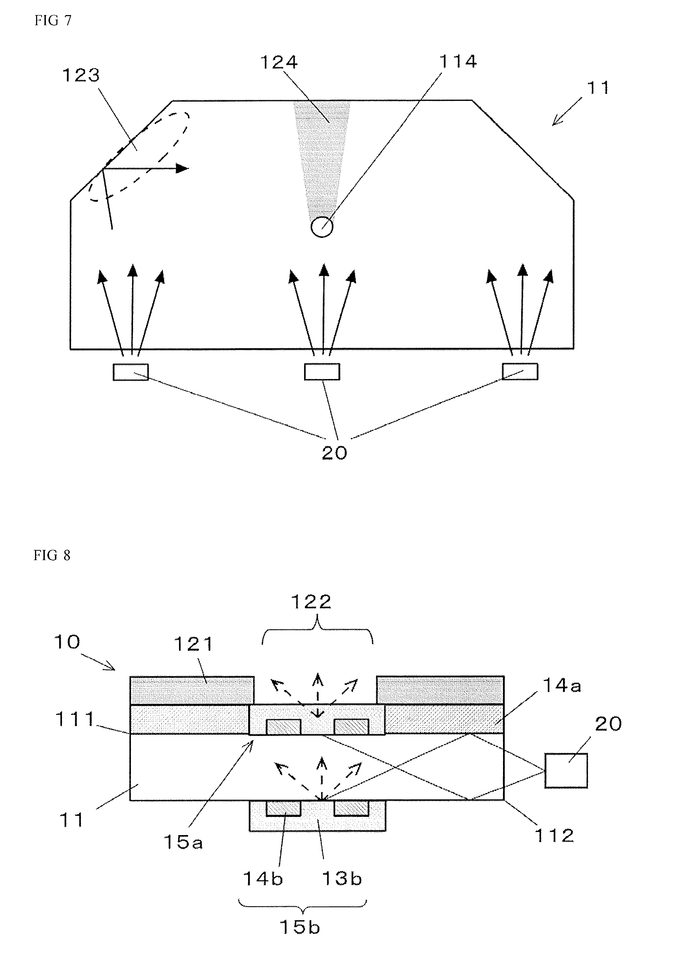

Uneven brightness of the display luminance is not limited to that due to distance from the light source 20 as described above. As illustrated in FIG. 7, an index portion end surface area 123 which is an area near the end surface of the light guiding portion 11 tends to become bright and, if there is a light guiding portion through hole 114 and the like for, for example, inserting a part in the light guiding portion 11 provided in the light guiding portion 12, the index portion shaded area 124 located behind the light guiding portion through hole 114 or behind other index portion when viewed from the light source tends to become dark. Accordingly, such uneven brightness can be reduced by setting output efficiency to be low in the index portion end surface area 123 by the display light adjusting portion 15 and setting output efficiency to be high in the index portion shaded area 124 by the display light adjusting portion 15.

In the thus-configured display device 100, the light output from the light source 20 is incident into a side surface of the light guiding portion 11 of the display member 10. The light incident into the light guiding portion 11 repeats total reflection on an interface between the light guiding portion 11 and the low refractive index portion 14a or an interface between the light guiding portion 11 and the air layer, and travels inside the light guiding portion 11. A part of the light which travels inside the light guiding portion 11 reaches the display light adjusting portion 15. The display light adjusting portion 15 can suitably decrease and increase the amount of the output light by changing the ratio of area of the light spreading portion 13 and the low refractive index portion for adjusting light 14b per unit area. Therefore, the index portion 122 can be illuminated with substantially uniform brightness irrespective of the distance from the light source 20, positional relationships among index portions, positional relationships between the index portion and the hole, whether the position is near the end surface, and the like.

The contents described in the embodiment are intended for embodying the technology according to the present invention, and do not limit the technical scope of the present invention. The technical contents of the present invention can be variously modified within the scope of the claims. Hereinafter, modifications of the present embodiment will be described with reference to FIG. 8 to FIG. 11. In addition, the technical matters described above or in the following modifications may be appropriately combined with each other.

In the embodiment described above, either the surface light adjusting portion 15a or the rear surface light adjusting portion 15b is disposed. However, as illustrated in FIG. 8, both of the surface light adjusting portion 15a and the rear surface light adjusting portion 15b may be provided (Third Embodiment).

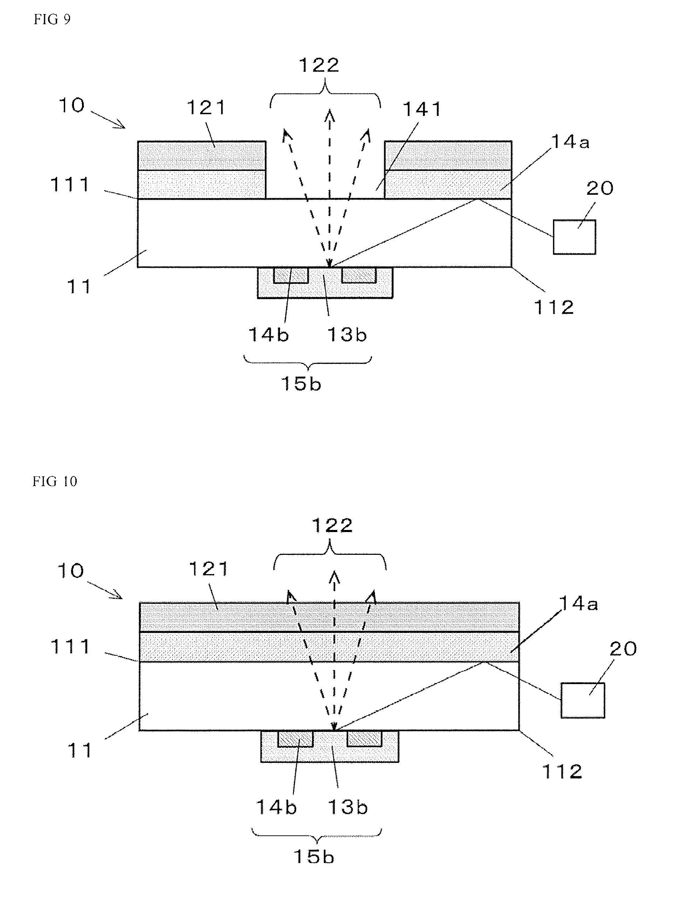

Furthermore, in the embodiment described above, the low refractive index portion 14a is provided throughout the entire surface 111 of the light guiding portion 11. However, as illustrated in FIG. 9, the low refractive index portion 14a may include a through hole 141 formed at a position through which the light spread by the light spreading portion 13 passes (Fourth Embodiment).

Furthermore, in the embodiment described above, the non-transmissive portion 121 formed in the design display portion 12 is a layer having non-light transmissive property (light blocking property). However, the non-transmissive portion 121 may be a layer having light transmissive property (including half-light transmissive property). Moreover, the non-transmissive portion 121 formed using the layer having light transmissive property may be provided to cover the index portion 122 as illustrated in FIG. 10 (Fifth Embodiment).

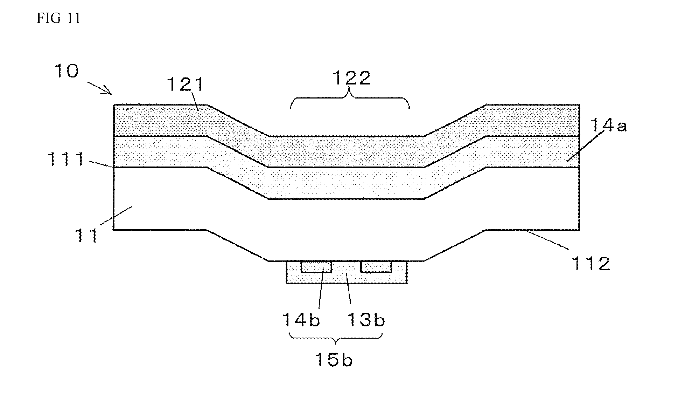

Moreover, in the embodiment described above, the display member 10 has a flat shape. However, as illustrated in FIG. 11, the display member 10 may be in a three-dimensional shape. For example, the display member 10 may be formed in a three-dimensional shape through air pressure molding, drawing molding and the like.
In addition, a three-dimensional light guiding portion 11 may be used, and the design display portion 12, the light spreading portion 13, the low refractive index portion 14 and the like may be stacked on the light guiding portion 11, thereby configuring a three-dimensional display member 10 (Sixth Embodiment).

### INDUSTRIAL APPLICABILITY

The present invention relates to a vehicle display device and may be applied to, for example, a display device for vehicle information display which displays indices, such as vehicle speed and engine revolutions, and displays the indices by an indicator, whereby a viewer can grasp a vehicle operation state.

### DESCRIPTION OF REFERENCE NUMERALS

- 10: Display Member
- 11: Light Guiding Portion
- 12: Design Display Portion
- 13: Light Spreading Portion
- 13a: Surface Light Spreading Portion
- 13b: Rear Surface Light Spreading Portion
- 14a: Low Refractive Index Portion
- 14b: Low Refractive Index Portion for Adjusting Light
- 15: Display Light Adjusting Portion
- 15a: Surface Light Adjusting Portion
- 15b: Rear Surface Light Adjusting Portion
- 20: Light Source
- 20a: First Beam of Light
- 20b: Second Beam of Light
- 111: Surface of Light Guiding Portion
- 112: Rear Surface of Light Guiding Portion
- 113: Exposed Surface
- 114: Light Guiding Portion Through Hole
- 121: Non-Transmissive Portion
- 122: Index Portion
- 123: index Portion End Surface Area
- 124: Index Portion Shaded Area
- 141: Through Hole

## Claims

1. A display device comprising:
a light source;
a light guiding portion for guiding light output from the light source;
a design display portion which includes a light outputting portion from which the light is output;
a low refractive index portion provided between the light guiding portion and the design display portion, the low refractive index portion having lower refractive index of light than that of the light guiding portion; and
a light spreading portion formed in the light guiding portion for spreading the light which is guided by the light guiding portion,
wherein a display light adjusting portion for changing output efficiency is provided in an area corresponding at least to the light outputting portion.

2. The display device according to claim 1, wherein the display light adjusting portion is constituted by the light spreading portion and a low refractive index portion for adjusting light.
